# EUROPÄISCHE PATENTSCHRIFT

(11) **EP 2 302 235 B1**
(45) Veröffentlichungstag und Bekanntmachung des Hinweises auf die Patenterteilung: **07.11.2012**
(21) Anmeldenummer: 09012359.7
(22) Anmeldetag: 29.09.2009
(51) Int. Cl.: F16B 47/00, A47K 17/02

(54) **Vakkumsauger**
Suction device
Ventouse de levage

(43) Veröffentlichungstag der Anmeldung: 30.03.2011
(73) Patentinhaber: Bohle AG, 42781 Haan (DE)
(72) Erfinder: Ostendarp, Dr. Heinrich, 42781 Haan (DE)
(74) Vertreter: Lippert, Stachow & Partner

(56) Entgegenhaltungen:
- WO-A1-2009/118362
- WO-A2-2008/151761

## Beschreibung

Die Erfindung betrifft einen Vakuumsauger, insbesondere einen Vakuumheber, zur temporären Fixierung an einer im wesentlichen glatten, luftundurchlässigen Befestigungsfläche, mit einher Trägerschale und einem flexiblen Saugteller sowie einem Betätigungsmechanismus, um unter zumindest bereichsweiser Lageveränderung des Saugtellers zwischen diesem und der Befestigungsfläche ein Teilvakuum zu erzeugen, wobei eine Anzeigeeinrichtung zur Anzeige des Teilvakuums mit einem mechanisch mittels eines Koppelungsmechanismus mit dem Saugteller gekoppelten Anzeigeelement vorgesehen ist und eine Bewegung zwischen einer Ausgangsstellung bei maximalem Teilvakuum und einer Endanzeigestellung bei Teilvakuumverlust durchführt (WO2008/151761A2).

Die Anzeige des bestehenden Teilvakuums bei einem Vakuumsauger ist für dessen Betriebssicherheit oftmals erwünscht, so dass bei Unterschreitung eines Mindestteilvakuums der Vakuumsauger nicht belastet wird, um ein unvorhergesehenes Lösen des Vakuumsaugers von dessen Befestigungsfläche zu vermeiden. Dies kann bei einer Benutzung des Vakuumsaugers zum Anheben von Gegenständen gelten, um Beschädigungen des die Befestigungsfläche aufweisenden Gegenstandes zu vermeiden, oder aber wenn der Vakuumsauger als zeitweilig an einer Befestigungsfläche montierter Handgriff von Personen benutzt wird, beispielsweise wenn diese den Vakuumsauger als zusätzlichen Handgriff benutzen, um sich in einer bestimmten Umgebung wie im Sanitärbereich sicherer bewegen zu können. Die Überprüfungsmöglichkeit eines ausreichenden Teilvakuums unter den zu erwartenden Belastungen ist hier von entscheidender Bedeutung, um die Personensicherheit gewährleisten zu können.

Vakuumsauger mit Einrichtungen zur Anzeige des Teilvakuums sind bekannt, wobei das Teilvakuum jeweils unmittelbar in der sich zwischen dem Saugteller und der Befestigungsfläche ausbildenden Vakuumkammer gemessen und mittels einer elektronischen Anzeige oder einer Manometeranzeige angezeigt wird. Die messtechnische Erfassung des Teilvakuums ist hierbei jedoch vergleichsweise aufwändig. Weiterhin beruhen diese Anzeigen auf Displays, auf welchen die angezeigten Werte jedoch nicht immer einfach erkennbar sind, da der Vakuumsauger teilweise auch von beliebigen, technisch nicht geschulten Personen betätigt wird. Die Unterschreitung eines vorgegebenen Teilvakuums ist für diese Personen auf einem Display nicht immer einfach erfassbar. Weiterhin ist zu berücksichtigen, dass bei Benutzung des Vakuumsaugers im Sanitärbereich, beispielsweise um eine Bewegung von Personen in einem Bad, einem Schwimmbecken oder dergleichen zu erleichtern, das Displays oft durch. Spritzwasser, Kondenswasserbildung usw. beaufschlagt wird und somit nicht erkennbar ist. Eine elektronische Anzeige bedarf hier ferner einer aufwändigen Kapselung oder arbeitet fehlerhaft. Andererseits sind derartige Vakuumsauger auch teilweise unter erhöhter Schmutzoder Staubbelastung einzusetzen, bei welchen eine Manometeranzeige störanfällig ist. Ein sicherer Betrieb der Anzeigeeinrichtung ist unter diesen Bedingungen somit nicht immer möglich.

Eine mechanische Ausgestaltung einer Anzeigeeinrichtung eines Vakuumhebers ist aus der DE 20 2007 008 376 U1 bekannt. Nach einem Ausführungsbeispiel wird durch eine Bewegung der Saugscheibe über eine Stellfeder eine entsprechende Bewegung des Anzeigelementes bewirkt. Eine Erfassung eines Vakuumverlustes ist hierdurch aber nur sehr schwer möglich, da die Saugscheibe bei Vakuumverlust nur relativ geringe Lageänderungen vollführt, so dass geringe Vakuumverluste nicht verlässig erkennbar sind. Nach anderen Ausführungsbeispielen erfolgt bei Vakuumverlust ebenfalls nur eine sehr unzuverlässige Vakuumverlustanzeige, da die Anzeige beispielsweise vermittels einer dünnen elastischen Membran erfolgt, welche sehr empfindlich und nicht immer zuverlässig arbeitet und auch Alterungsvorgängen unterliegt, oder beispielsweise vermittels eines reibschlüssig in seiner Ausgangsposition gehaltenen Schlittens, wobei der Reibschlussmechanismus hohem Verschleiß unterliegt und empfindlich gegen Verschmutzung durch z.B. Staub, Fette und dergleichen ist. Die Einsatzmöglichkeiten eines solchen Vakuumsaugers sind also sehr beschränkt.

Der Erfindung liegt somit die Aufgabe zugrunde, einen Vakuumsauger zu schaffen, bei welchem die Anzeigeeinrichtung konstruktiv einfach ausgeführt ist und unter unterschiedlichen Umgebungsbedingungen auch von einer ungeübten Bedienperson eine Verringerung des Teilvakuums einfach und zuverlässig erfassbar ist, der auf einfache Weise und kostengünstig herstellbar ist und der eine leichte Erkennung der Anzeige ermöglicht.

Diese Aufgabe wird durch einen Vakuumsauger nach Anspruch 1 gelöst. Vorteilhafte Weiterbildungen ergeben sich aus den Unteransprüchen.

Erfindungsgemäß ist der Koppelungsmechanismus in Form einer mechanischen Wegübersetzung ausgebildet, so dass er bei Vakuumverminderung Lageveränderungen oder Deformationen der Saugscheibe ab beginnendem Vakuumverlust vorzugsweise kontinuierlich während des Ausfahrens des Anzeigeelementes in Richtung auf seine Endanzeigestellung mit dem Anzeigeelement kraftübertragend in verstärkte Lageänderungen des Anzeigeelementes überführt. Die Wegübersetzung kann somit durch die Kraftübertragung in Kraftflussrichtung bewirkt werden. Die Vakuumverlustanzeige kann somit bereits bei Beginn des Vakuumverlustes und nicht erst ab einem signifikanten Schwellwert erfolgen. Die Endanzeigestellung liegt bei einem ebenfalls signifikanten Vakuumverlust vor, beispielsweise dann, wenn das Teilvakuum nicht mehr einen sicheren Halt des Vakuumsaugers gewährleistet. Die Bewegung des Anzeigelementes, z.B. eine Ausfahrbewegung, erstreckt sich also kontinuierlich über ein signifikantes Vakuumintervall.. Die kontinuierliche Bewegung kann linear oder gegebenenfalls auch nicht-linear sein, beispielsweise überproportional zunehmend mit zunehmendem Vakuumverlust. Kontinuierlich heißt, dass mit Fortschritt des Vakuumverlustes ein Fortschritt der Änderung der Lage des Anzeigeelementes mit zumindest einer oder mehreren Zwischenstufen durch den Beobachter nachvollziehbar ist. Die kontinuierliche Verminderung des Teilvakuums kann über das Anzeigeelement verfolgt werden kann, welches seine Lage stufenweise oder stufenlos mit der Änderung des Teilvakuum verändern kann. Vorzugsweise ist die Bewegung stetig, also ohne Sprungstellen oder Diskontinuitäten. Durch die Wegübersetzung ist zudem eine empfindliche Vakuumverlustanzeige gegeben. Mittels des Koppelungsmechanismus kann das Anzeigeelement eine vorzugsweise kontinuierliche Bewegung zwischen einer Ausgangsstellung bei maximalem Teilvakuum und einer Endanzeigestellung bei Teilvakuumverlust durchführen.

Die Lageveränderungen oder Deformationen der Saugscheibe werden dann mittels des Koppelungsmechanismus kontinuierlich während des Ausfahrens des Anzeigeelementes kraftübertragend in verstärkte Lageänderungen des Anzeigeelementes überführt. Es erfolgt somit eine gezielte Kraftübertragung der Saugscheibenbewegung über den Koppelungsmechanismus auf das Anzeigeelement, um über diese Übertragung der Kraftwirkung eine Bewegung des Anzeigeelementes zu bewirken. Die Übertragung der Kraftwirkung bedingt somit eine Kraftflusslinie vom Saugteller zum Anzeigeelement, um eine Bewegung desselben zu bewirken, die gegenüber einer Bewegung des Saugtellers verstärkt wird. Die Verstärkung erfolgt über die Wegübersetzung und/oder Kraftuntersetzung der Koppelungselemente. Hierdurch ist die Lage des Anzeigeelementes ausgehend von dessen Ausgangslage und der Ausgangslage der Saugscheibe stets mechanisch bestimmt. Das Übersetzugsverhältnis: des Koppelungsmechanismus (Verhältnis Lageänderung Saugscheibe zu Lageänderung Anzeigeelement) ist somit über die gesamte Anzeigebewegung des Anzeigeelementes mechanisch vordefiniert. Mechanische.Undefiniertheiten wie sie beispielsweise vorliegen, wenn das Teilvakuum durch eine dünne elastische Membran auf das Anzeigeelement übertragen wird, scheiden somit aus. Damit ist unter unterschiedlichsten Umgebungsbedingungen eine zuverlässige Anzeige gegeben, beispielsweise auch bei unterschiedlichen Umgebungstemperaturen (z.B. Außenbedingen in Sommer/Winter), bei welchen eine elastische Membran nicht zuverlässig arbeitet. Ein Vakuumverlust kann somit von Beginn an kontinuierlich verfolgt werden.

Vorzugsweise weist die mechanische Wegübersetzung zumindest ein starres Kraftübertragungselement auf oder besteht in Bezug auf die Kraftübertragungslinie ausschließlich aus starren, mithinander gelenkig oder lageveränderlich verbundenen Kraftübertragungselementen. Solche Kraftübertragungselemente können, gegebenenfalls in Kombination miteinander, starre Gestängeteile, Zahnräder oder dergleichen sein, die eine mechanisch definierte Kraftübertragung von dem Saugteller auf das Anzeigelement ermöglichen. Gegebenfalls können auch andere Maschinenelemente in dem Übersetzungsmechanismus vorgesehen sein.

Vorzugsweise ist zumindest eines oder sämtliche der Kraftübertragungselemente und/oder das Anzeigeelement, die jeweils von den Elementen des Betätigungsmechanismus verschieden sind, als Schwenkhebel ausgebildet sind. Einer oder mehrere der Schwenkhebel des Übersetzungsmechanismus können außermittig gelagert sein und hier durch eine Wegübersetzung in Bezug auf das Anzeigeelement bewirken.

Vorzugsweise ist der Koppelungsmechanismus als Gestänge- oder Getriebeübersetzung ausgebildet. Hierdurch können definierte Kraftübertragungen bei hohen Übersetzugsverhältnissen realisiert werden.

Der Koppelungsmechanismus kann derart ausgebildet sein, dass sich die Bewegung des Anzeigelementes, z.B. eine Ausfahrbewegung, kontinuierlich über ein signifikantes Vakuumintervall erstreckt, beispielsweise ein Intervall von ≥ 0,01 bis 0,025 bar oder ≥ 0,05 bis 0,075 bar oder auch ≥ 0,1 bis 0,15 bar. Das Intervall kann auch ≥ 0,2 bis 0,3 bar betragen. Beispielsweise kann das Intervall ≤ 0,5 bis 0,75 bar oder ≤ 0,2-0,35 bar betragen, so dass es, noch einen gewissen Halt des Vakuumsaugers an der Befestigungsfläche ermöglicht.

Es kann das Anzeigeelement oder zumindest ein Teil der Anzeigeeinrichtung in dem Betätigungsorgan integriert sein. Das Anzeigeelement ist hierdurch auch besonders gut wahrnehmbar und nicht durch andere Bauteile verdeckt. Ist ein Vakuumsauger mit Anzeigeeinrichtung herzustellen, so kann von einem herkömmlichen Saugteller ausgegangen werden, es ist lediglich ein anderes Betätigungsorgan mit vorzugsweise bereits integriertem Anzeigeelement bereitzustellen. Sämtliche Bauteile der Anzeigeeinrichtung, welche von dem Betätigungsmechanismus verschieden sind, können vollständig in dem Betätigungsorgan integriert sein und zusammen mit diesem an dem Vakuumsauger montierbar und/oder demontierbar sein. Eine derartige mechanisch wirkende Anzeigeeinrichtung ist zudem besonders robust, arbeitet auch unter widrigen Umgebungsbedingungen stets zuverlässig und ist von äußeren Störeinflüssen wie Feuchtigkeit, Staub oder dergleichen praktisch nicht beeinflussbar.

Durch die mechanische Koppelung des Anzeigeelementes mit dem Saugteller kann allgemein im Sinne der Erfindung eine mit der Veränderung des Teilvakuums einhergehende Veränderung der Stellung des Anzeigeelementes von der Bedienperson auch unter widrigen Umgebungsbedingungen wie Feuchtigkeits- oder Staubbeaufschlagung stets zuverlässig erkannt werden. Die Anzeige kann beispielsweise derart erfolgen, dass mit zunehmender Verminderung des Teilvakuums das Anzeigeelement zunehmend gegenüber einem Referenzteil wie einer Skalierung, einem Gehäuseteil, dem Betätigungsorgan oder dergleichen hervortritt, so dass bereits ein relativ geringer Verlust des Teilvakuums durch das Anzeigeelement sicher erfassbar ist. Das Anzeigeelement kann hierbei mit einem das Anzeigeelement verlängerndem Koppelungselement mit dem Saugteller mechanisch gekoppelt sein, so dass eine teilweise Lageveränderung oder Deformation des Saugtellers eine Lageveränderung des Anzeigeelementes bewirkt. Hierzu kann das Anzeigeelement kraftaufnehmend mit dem Saugteller verbunden sein.

Besonders bevorzugt kann die Vakuumanzeige derart ausgebildet sein, dass das Anzeigeelement eine Änderung des Teilvakuums optisch und/oder haptisch erfassbar anzeigt. Eine optische Anzeige kann dadurch erfolgen, dass das Anzeigeelement mit abnehmendem Teilvakuum in der Vakuumkammer gegenüber einem Referenzpunkt, z.B. dem Betätigungsorgan oder einem Gehäuseteil, zunehmend von dem Vakuumsauger vorstehend verschoben wird oder gegebenenfalls auch von dem Vakuumsauger mit sich verringerndem Ausmaß vorsteht, beispielsweise zunehmend in ein Gehäusebauteil des Vakuumsaugers hineingezogen wird. Eine haptisch erfassbare Änderung der Anzeigestellung des Anzeigeelementes kann hierbei dadurch erfolgen, dass das erhöhte oder das verringerte Ausmaß des Vorstehens gegenüber einem Referenzpunkt, beispielsweise einem Gehäusebauteil oder dem Betätigungsorgan, manuell ertastbar ist.. Insbesondere kann bei maximalem Teilvakuum, gegebenenfalls unter Berücksichtigung einer tolerablen Abweichung, das Anzeigeelement bündig mit dem Gehäusebauteil oder einem anderen benachbarten Bauteil abschließen und bei weiterer Vakuumverminderung von diesem vorstehen, wodurch die. Lageänderung des Anzeigeelementes besonders leicht ertastbar ist.

Das Anzeigeelement der Anzeigeeinrichtung ist besonders bevorzugt mit dem Saugteller mechanisch gekoppelt oder mit diesem verbunden, insbesondere mit einem Bereich desselben, welcher vorzugsweise bei Veränderung des Teilvakuums eine möglichst große Lageveränderung durchführt, wie z.B. der mittlere Bereich der Saugteller, welcher gegenüber dem an der Befestigungsfläche fixierten Rand des Saugtellers durch die Teilvakuumbeaufschlagung eine relativ große Lageveränderung erfährt.

Allgemein kann das Anzeigeelement mittelbar über mindestens ein Koppelungselement an dem Saugteller ankoppeln. Ist der Saugteller mit einem Versteifungselement versehen, welches in dem mittleren Bereich derselben angeordnet sein kann, so kann das Anzeigeelement mechanisch mittelbar oder unmittelbar an dem Versteifungselement ankoppeln. Das Versteifungselement kann eine an dem Saugteller anvulkanisierte Versteifungsplatte sein, die aus Stahl oder einem anderen geeigneten Material bestehen kann. Vorzugsweise ist das Versteifungselement plattenförmig ausgebildet und mit dem Saugteller flächig verbunden.

Allgemein kann die Anzeigeeinrichtung zumindest im Wesentlichen oder vollständig in dem Betätigungsorgan integriert sein, was aber auch nicht zwingend für das Anzeigeelement oder die Anzeigeeinrichtung gelten muss. Beispielsweise kann die Anzeigeeinrichtung teilweise oder im Wesentlichen, z.B. auch das Anzeigeelement an dem Saugteller angeordnet oder in diesem integriert sein oder an bzw. in einer anderen Einrichtung des Saugers, z.B. auch einem zusätzlichen Gehäuseteil.

Die Anzeigeeinrichtung weist somit einen Kopplungsmechanismus mit.mindestens einem Kopplungselement auf, welcher vorzugsweise bereits geringe durch die Veränderung des Teilvakuums hervorgerufene Lageveränderungen des Saugtellers bzw. eines Saugtellerbereichs bei nachlassendem Teilvakuum fortschreitend oder schlagartig mechanisch gekoppelt in verstärkte Lageänderungen des Anzeigeelementes überführt. Hierdurch weist die Anzeigeeinrichtung eine sehr hohe Empfindlichkeit auf. Die Lageänderungen des Saugtellers bzw. eines Saugtellerbereichs können schrittweise oder kontinuierlich unter mechanischer Koppelung in verstärkte Lageänderungen des Anzeigeelementes überführt werden. Durch die fortwährende vorzugsweise mechanische Koppelung der Anzeigeeinrichtung bzw. des Anzeigeelementes mit dem Saugteller ist eine besonders zuverlässige und robuste Anzeigeeinrichtung auch unter schwierigen Umgebungsbedingungen und mit besonders hoher Langlebigkeit gegeben. Der Koppelungsmechanismus kann gegebenenfalls ein reiner Hebel- bzw. Hebel-Feder- und/oder Zahnradmechanismus, er kann allgemein frei von hydraulischen und/oder pneumatischen Elementen wie Kraftübertragungselementen sein oder solche gegebenenfalls aufweisen.

Der Koppelungsmechanismus kann derart ausgebildet sein, dass das Anzeigeelement mit einer gewissen Druckkraft in seiner Nichtanzeige- bzw. Ausgangsposition gegen einen ersten Anschlag gedrückt wird, so dass keine Anzeige erfolgt. Gegebenenfalls kann hierzu eine Feder vorgesehen sein, diese Feder kann beispielsweise in dem Betätigungsorgan.integriert sein. Das Anzeigeelement kann allgemein proportional zum vakuumverlust zunehmend in seine Anzeigeposition, beispielsweise gegen einen die maximale Anzeigeposition bestimmenden zweiten Anschlag, ausfahren, gegebenenfalls auch einen nicht-linearen Anzeigeverlauf aufweisen, wobei mit zunehmendem Vakuumverlauf eine fortwährende, z.B. kontinuierliche oder schrittweise Anzeige mit mehreren Anzeigepositionen erfolgt, vorzugsweise eine praktisch schlagartige Bewegung. Dieses Funktionsprinzip kann gegebenenfalls durch die Anordnung eines separaten Federelementes der Anzeigeeinrichtung, welche auf das Anzeigeelement wirkt, erzielt werden.

Die Anzeigeeinrichtung kann derart ausgebildet sein, dass bei Betätigung des Betätigungsorgans unter Erzeugung eines Teilvakuums das Anzeigeelement erst bei Erreichen eines gewissen Mindestteilvakuums (d.h. erst unterhalb eines bestimmten absoluten Druckes in dem Hohlraum zwischen Saugteller und Befestigungsfläche) in eine ein bestehendes Teilvakuum anzeigende Position überführt wird, beispielsweise gegen den ersten Anschlag, sofern vorgesehen. Die Höhe des Mindestteilvakuums, bei dem die eingefahrene Position der Anzeigeeinrichtung vollständig erreicht ist und/oder das Verhalten der Anzeigeeinrichtung bis zur ausgefahrenen, Vakuumverlustanzeigenden Position kann durch unterschiedliche Ausgestaltungen eines oder mehrerer auf die Anzeigeeinrichtung einwirkender Federelemente und der mechanischen übersetzung - und Kopplungseinrichtung, insbesondere deren Übersetzungsverhältnis, wahlweise unterschiedlich gestaltet oder definiert werden. So kann ausgehend vom Mindestteilvakuum (vollständig eingefahrene Position des Anzeigeelements) die ausgefahrene Position (Erreichung des Teilvakuumschwellwertes) in einem vorzugsweise näherungsweise linearen oder anders definierten Zusammenhang zum Teilvakuumverlust erreicht werden.

Der Koppelungsmechanismus der Anzeigeeinrichtung kann allgemein eine Wegübersetzung aufweisen, welche geringfügige Lageänderung des Saugtellers oder eines Saugtellerbereichs in verstärkte Lageänderungen des Anzeigeelementes überführt. Diese Wegübersetzung kann mindestens ein oder mehrere mechanische Koppelungselemente in Form von Schwenkhebeln aufweisen, welche außermittig gelagert sind, wobei jeweils der kürzere Hebelbereich der beiden Hebelbereiche des Koppelungselementes des Saugtellers zugewandt angeordnet sein kann. Es können auch zwei oder mehr derartige Schwenkelemente vorgesehen sein, wobei auch das Anzeigeelement als ein derartiges Schwenkelement ausgebildet sein kann. Die Schwenkhebel können jeweils linear ausgebildet sein, gegebenenfalls auch als Knie- oder Winkelhebel oder in Form anderer geeigneter Hebelelemente. Die wegübersetzenden Koppelungselemente oder andere Koppelungselemente können zum. Teil oder gegebenenfalls vollständig als pneumatische und/oder hydraulische Koppelungselemente ausgebildet sein. Die Koppelung kann somit allgemein eine mechanische, eine pneumatische und/oder eine hydraulische Koppelung sein, vorzugsweise eine mechanische Koppelung.

Durch die außermittige Lagerung eines oder mehrerer als Schwenkhebel ausgebildeten Kopplungselemente und/oder des Anzeigeelementes der Anzeigeeinrichtung und/oder Wahl der Federkraft einer Feder der Anzeigeeinrichtung kann eine Übersetzung bereitgestellt werden, bei welcher das Übersetzungsverhältnis der Lageveränderung des Saugtellerbereichs auf die (größere) Lageveränderung des Anzeigeelementes auf baulich einfache Weise variiert werden kann. Allgemein kann auch das Anzeigeelement selber als Übersetzungselement, z.B. als außermittig gelagerter Hebel, ausgebildet sein. Hier'zu können die Hebelverhältnisse an einem oder mehreren der Schwenkhebel des Koppelungsmechanismus in geeigneter Weise gewählt werden, wobei es ausreichend sein kann, lediglich die Lage der Verschwenk- bzw. Lagerpunkte der jeweiligen Koppelungselemente zu verändern oder eine Feder mit anderer Federkonstante einzusetzen. Der Aufbau der Anzeigeeinrichtung im Übrigen kann hierbei beibehalten werden. Es versteht sich, dass besonders große Übersetzungsverhältnisse erzielt werden können, wenn zwei oder mehr derartige Koppelungselemente, welche eine Wegübersetzung bewirken, hintereinander geschaltet sind.

Zusammen mit der Wegübersetzung des Koppelungsmechanismus geht vorzugsweise auch eine Kraftübersetzung (mit umgekehrtem Übersetzungsverhältnis) einher. So ist vorzugsweise dem Anzeigeelement ein Federelement (z.B. eine Druckfeder) zugeordnet (dieses ist vorzugsweise von einem etwaigen Federelement des Betätigungsmechanismus verschieden). Der durch das umgesetzte Übersetzungsverhältnis hochgesetzten Kraft des Federelements kann neben der durch das Teilvakuum hervorgerufenen Kraft noch.die weitaus geringere Kraft des Federelements des Betätigungsmechanismus entgegen wirken. Bei Bestätigung des Vakuumsaugers zur Erzeugung eines Teilvakuums kann letzteres Federelement vorgespannt werden, während gleichzeitig das Betätigungsorgan in seine Betätigungsstellung überführt wird. Das Anzeigeelement kann durch das Federelement der Anzeigeeinrichtung federkraftbeaufschlagt in seiner Anzeigeposition positioniert werden. Aufgrund des Übersetzungsmechanismus der Anzeigeeinrichtung, der mit zunehmender Wegübersetzung eine gegenläufig abnehmende Kraftübersetzung darstellt, kann das Federelement bei Betätigung des Betätigungsmechanismus mit vergleichsweise geringer Kraft gespannt werden. Es versteht sich, dass etwaige Federelemente des Koppelungsmechanismus derart auszubilden sind, dass der Koppelungsmechanismus bereits ab beginnendem Vakuumverlust vorzugsweise kontinuierlich das Anzeigeelementes in Richtung auf seine Endanzeigestellung überführt.

Die Lagerpunkte der Koppelungselemente bzw. des Anzeigeelementes können jeweils an dem Betätigungsorgan vorgesehen sein. Allgemein kann die Anzeigeeinrichtung teilweise oder vollständig zusammen mit dem Betätigungsorgan als bauliche Einheit von dem Vakuumheber demontierbar sein, beispielsweise unter Lösung der Gelenkverbindung des Betätigungsorgans von dem an dem Saugteller ankoppelnden Verbindungselement.

Das Anzeigeelement kann durch einen Fortsatz an dem benachbarten Koppelungselement angelenkt sein, wobei das Anzeigelement und der Fortsatz in Art eines Kolbens gegeneinander längsverschiebbar angeordnet sein können.

Weiterhin ist besonders bevorzugt die Anzeigeeinrichtung derart ausgebildet, dass ein Versagen eines Elementes derselben Anzeige einen scheinbaren Vakuumverlust anzeigt, nicht aber die Anzeige trotz Vakuumverlustes das Vorhandensein eines (ausreichenden) Teilvakuums anzeigt. Weiterhin kann die Anzeigeeinrichtung derart ausgebildet sein, dass ein Versagen eines Elementes derselben nicht zu einer Beeinträchtigung des Betätigungsmechanismus und damit auch des erzeugten Teilvakuums führt. Hierzu kann ein Koppelungselement der Anzeigeeinrichtung an einem zwischen Saugteller und Betätigungsorgan vorgesehenen Verbindungselement des Betätigungsmechanismus angreifen, oder aber an einer Koppelungsstelle, welche abseitig zu der (Gelenk)verbindung zwischen Betätigungsorgan und dem Verbindungselement angeordnet ist, d.h. auf der dem Saugteller abgewandten Seite des Verbindungselementes. Die Anzeigeeinrichtung befindet sich somit nicht mehr im Kraftfluss des Betätigungsmechanismus. Dies gilt insbesondere für ein etwaiges Federelement der Anzeigeeinrichtung, welches zusätzlich zu einem Federelement des Betätigungsmechanismus vorgesehen sein kann.

Allgemein sind weitere Modifizierungen des Übersetzungsmechanismus möglich. Beispielsweise können Blattfedern als Federelemente vorgesehen sein, welche gleichzeitig die Funktion eines Übersetzungselementes (Koppelungselementes) und eines Federelementes übernehmen können.

Weiterhin ist es denkbar, dass bei Vakuumverlust nicht ein Anzeigeelement relativ zu dem Betätigungsorgan bewegt wird sondern das Betätigungsorgan (insbesondere in Ausbildung als Kipphebel) selbst einen Anzeigeweg gegenüber der Trägerschale des Vakuumsaugers vollzieht. Hierzu kann beispielsweise das Federelement des Betätigungsmechanismus oder ein anderes Federelement der Anzeigeeinrichtung auf ein Unterstützungselement des Betätigungsorgans wirken, welches mit sich veränderndem Teilvakuum lageveränderlich ist.

Weiterhin kann an dem Saugteller, einschließlich dem Versteifungselement, ein Koppelungselement angeordnet sein, welches eine zumindest bereichsweise Lageveränderung des Saugtellers, beispielsweise des mittleren Bereichs derselben, auf das Anzeigeelement überträgt. Durch das Koppelungselement ist einerseits eine mechanisch stabile Ankoppelung des Anzeigeelementes an dem Saugteller ermöglicht, andererseits kann das Anzeigeelement leicht ausgetauscht oder in seiner Lage gegenüber dem Saugteller verändert werden, beispielsweise um eine Justierung der Vakuumanzeigeeinrichtung durchzuführen. Koppelungselement und Anzeigeelement sind somit vorzugsweise lösbar und/oder teleskopierbar aneinander befestigt.

Nach einer bevorzugten Ausführungsform können das Koppelungselement und/oder das Anzeigeelement als Schwenkhebel ausgebildet sein. Das Koppelungselement und/oder das Anzeigeelement sind hierbei bevorzugt in einer quer oder parallel zur Hauptebene des Saugtellers stehenden Ebene schwenkbar, vorzugsweise in einer senkrecht zu der Saugtellerhauptebene stehenden Ebene. Durch die verschwenkbare Lagerung des jeweiligen Elementes kann bei gegebener Lageveränderung des Saugtellers eine hohe Empfindlichkeit der Anzeige erzielt werden, wozu somit eine Wegübersetzung der Lageveränderung des Saugtellerbereichs in eine verstärkte Lageveränderung des Anzeigeelementes erfolgt.

Sind das Koppelungselement und das Anzeigeelement jeweils als Schwenkhebel oder Wippe ausgebildet, so können diese derart gelagert sein, dass sie bei Verminderung des Teilvakuums eine gegensinnige Schwenkbewegung durchführen, wodurch eine betonders kompakte Bauweise erzielbar ist. Das Anzeigeelement und/oder das Koppelungselement können hierbei an dem Betätigungsorgan der Betätigungseinrichtung schwenkbar gelagert sein, wobei das Betätigungsorgan insbesondere ebenfalls als Schwenkhebel ausgeführt sein kann. In dieser Ausgestaltung aber auch allgemein kann das Anzeigeelement schwimmend an dem ein Widerlager bildenden Bauteil gelagert sein, insbesondere kann das Anzeigeelement mit einer wulstförmigen Erhebung an der Unterseite des Betätigungsorgans unter Ausbildung einer Gelenkverbindung anliegen.

Das Koppelungselement, welches beispielsweise in Art eines Gestängeteils ausgebildet sein kann, kann einerseits gelenkig mit einem an dem Saugteller angreifenden Verbindungselement, verbunden sein, wobei das Verbindungselement als Zugbolzen ausgebildet sein kann, der sich im Wesentlichen senkrecht zu der Hauptebene des Saugtellers erstrecken kann. Weiterhin kann das Koppelungselement gelenkig mit dem Betätigungsorgan der Betätigungseinrichtung verbunden sein. Diese beiden Gelenkverbindungen können einander benachbart angeordnet sein, so dass der Abstand derselben voneinander kleiner oder wesentlich kleiner zueinander ist, als der Abstand des Schwenklagers des Anzeigeelementes zu einem der beiden zuvor genannten Gelenkverbindungen oder zu einer Verbindung bzw. eines Gelenkbereichs von Koppelungselement mit Anzeigeelement. Der Anzeigebereich des Anzeigeelementes kann hierbei der Gelenkverbindung des Koppelungselementes mit dem Verbindungselement insbesondere räumlich zugewandt sein, wobei das Lager des Anzeigeelementes dieser Gelenkverbindung abgewandt angeordnet sein kann.

Das Anzeigeelement kann in der Betätigungsstellung des Betätigungsorgans bei maximalem Teilvakuum lagefixiert sein, wodurch eine zuverlässige Anzeigeeinrichtung gegeben ist. Mit Verminderung des Teilvakuums kann die Lagefixierung aufgehoben werden. So kann der dem Anzeigebereich abgewandte Endbereich des Anzeigeelementes bei maximalem Teilvakuum zwischen dem Betätigungsorgan und dem Koppelungselement lagefixiert sein, indem die genannten Bauteile aneinander anliegen, mit Verminderung des Teilvakuums kann ein Spiel oder Freiraum zwischen dem Anzeigeelement und dem Betätigungsorgan und/oder Koppelungselement entstehen, der eine Lageveränderung des Anzeigeelementes ermöglicht, so dass dieses eine Verminderung des Teilvakuums anzeigt.

Vorzugsweise ist das Koppelungselement oder zumindest ein Teil der' Anzeigeeinrichtung Teil des Betätigungsmechanismus zur Erzeugung eines Teilvakuums. Ein Bauteil des Betätigungsmechanismus, welches verschieden von dem Saugteller ist und gegebenenfalls auch verschieden von einem an dem Saugteller angreifenden Zugbolzen sein kann, kann.somit zugleich Teil der Anzeigeeinrichtung sein. Dieses Teil kann beispielsweise kraftübertragend zwischen Zugbolzen und dem Betätigungsorgan, welches vorzugsweise als Kipphebel ausgebildet ist, angeordnet sein. Allgemein kann das Anzeigeelement als separates Bauteil in dem Betätigungsorgan integriert und bei seiner Anzeige gegenüber dem Betätigungsorgan lageveränderlich sein. Allgemein kann das Betätigungsorgan als Kipphebel ausgeführt sein.

Das Anzeigeelement kann gekoppelt mit dem Koppelungselement verschiebbar ausgeführt sein. Vorzugsweise erstreckt sich das Koppelungselement und/oder das Anzeigeelement zumindest im Wesentlichen senkrecht zu der Hauptebene des Saugtellers, wodurch Lageveränderungen des Saugtellers aufgrund einer Änderung des Teilvakuums besonders einfach und direkt auf die Anzeigeeinrichtung übertragbar sind. Um eine besonders robuste und langlebige Anzeigeeinrichtung zu schaffen, können das Koppelungselement und/oder das Anzeigeelement in einer Axialführung axial geführt sein, so dass Lageänderungen des Saugtellers zuverlässig auf das Anzeigeelement übertragen werden können. Unabhängig hiervon können das Anzeigeelement und das Koppelungselement koaxial zueinander angeordnet und miteinander kraftübertragend verbunden sein, beispielsweise in Form von aneinander befestigten Gestängeteilen oder Stiften. Allgemein kann das Anzeigeelement eine Verlängerung des Koppelungselementes darstellen. Das Anzeigeelement kann allgemein in Art eines Zugbolzens ausgebildet sein, so dass durch dessen Verschiebung gegenüber einem Referenzpunkt oder dessen Heraustreten oder Hineinziehen in ein Gehäuseteil der Anzeigeeinrichtung eine Veränderung des Teilvakuums einfach und zuverlässig anzeigbar ist.

Das Anzeigeelement kann allgemein derart ausgeführt sein, dass es bei Verminderung des Teilvakuums eine translatorische Bewegung durchführt, vorzugsweise eine translatorische Bewegung zumindest im Wesentlichen senkrecht zu der Hauptebene der.Trägerschale. Alternativ kann das Anzeigeelement auch bei Verminderung des Teilvakuums eine Schwenkbewegung in einer Ebene durchführen, die quer oder parallel zu der Hauptebene der Trägerschale stehen kann. Beispielsweise kann hierzu das Anzeigeelement als Schwenkhebel ausgeführt sein, wobei ein mit dem Saugteller verbundenes Koppelungselement auf einen der Hebelarme des Schwenkhebels wirkt und der andere Hebelarm des Schwenkhebels als Anzeigeelement fungiert. Zwischen Saugteller und Anzeigeelement kann auch ein Übertragungsmechanismus vorgesehen sein, so dass bei Verringerung des Teilvakuums und Beabstandung des mittleren Bereichs des Saugtellers von der Befestigungsfläche das als Schwenkhebel ausgebildete Anzeigeelement auch eine Bewegung in einer anderen Richtung durchführt, beispielsweise eine Schwenkbewegung, bei welcher das Anzeigeelement von der Trägerschale nach oben weg verschwenkt wird oder der eine Verschwenkung des Anzeigeelementes in einer parallel zur Trägerschale stehenden Ebene bewirkt. Die Verschwenkung des Anzeigeelementes kann auch in einer senkrecht zur Trägerschalenhauptebene stehenden Ebene erfolgen.

Weiterhin kann die Anzeigeeinrichtung Einstellmittel aufweisen, mittels derer eine Nullpunktverstellung der Anzeigeeinrichtung möglich ist und/oder die Anzeigestellung des Anzeigeelementes in Bezug auf ein Teilvakuum, dessen Unterschreitung anzuzeigen ist, einstellbar ist. Das Teilvakuum, ab welchem die Anzeigeeinrichtung eine Vakuumänderung anzeigt, ist somit einstellbar und frei wählbar. Hierzu kann das Anzeigeelement gegenüber dem Koppelungselement und/oder dem Saugteller lageveränderlich ausgebildet sein, insbesondere unter Veränderung des Abstandes zu dem Saugteller. Das Anzeigeelement kann hierzu gegenüber dem Koppelungselement teleskopierbar sein, beispielsweise durch eine Schraubverbindung zwischen Koppelungselement und Anzeigeelement. Das Anzeigeelement kann hierzu in einer Gewindebohrung des Koppelungselementes aufgenommen sein. Alternativ oder zusätzlich kann das Einstellmittel einen gegenüber dem Anzeigeelement und/oder dem Saugteller lageveränderlichen Referenzpunkt aufweisen. Der Referenzpunkt kann an einem benachbart dem Anzeigeelement angeordneten Bauteil wie z.B. einem das Anzeigeelement zumindest teilumfänglich umgebenden Gehäuseteil der Anzeigeeinrichtung vorgesehen sein, welches lageveränderlich sein kann.

Die Anzeigeeinrichtung kann zumindest teilweise oder vollständig in dem Betätigungsmechanismus, insbesondere dem Betätigungsorgan, integriert bzw. von diesem aufgenommen. Dies kann für das Anzeigeelement oder die Anzeigeeinrichtung insgesamt gelten. Besonders bevorzugt ist die Anzeigeeinrichtung oder das Anzeigeelement derselben, bezüglich der Bauteile, die von dem Betätigungsmechanismus verschieden sind, zumindest teilweise oder vollständig in dem Betätigungsorgan des Betätigungsmechanismus integriert bzw. von diesem aufgenommen.

Das Anzeigeelement kann allgemein über einen Teil des Betätigungsmechanismus an dem Saugteller ankoppeln. Die Anzeigeeinrichtung kann ein Gehäuseteil aufweisen, welches durch Betätigung der Betätigungseinrichtung lageveränderlich ist und in eine Betriebsstellung des Saughebers überführbar ist, in welcher maximales Teilvakuum vorliegt. Das Gehäuseteil kann gegenüber der Trägerschale des Saugtellers lageveränderlich sein. Das Gehäuseteil kann an der Trägerschale gelagert sein. Eine Änderung des Teilvakuums kann durch Lageveränderung des Anzeigeelementes gegenüber dem Gehäuseteil oder einem anderen Referenzpunkt angezeigt werden. Das Gehäuseteil kann verschiebbar ausgeführt sein, insbesondere senkrecht zu der Hauptebene des Saugtellers verschiebbar. Das Gehäuseteil kann an dem Betätigungsorgan der Betätigungseinrichtung ankoppeln und ggf. von diesem gehaltert sein, so dass mittels des Betätigungsorganes zugleich auch das Gehäuseteil der Anzeigeeinrichtung lageveränderlich ist.

Allgemein im Rahmen der Erfindung kann das Betätigungsorgan der Betätigungseinrichtung als Knie- oder Kipphebel ausgebildet sein. Das Betätigungsorgan kann über ein Verbindungselement wie z.B. einen Zugbolzen an dem Saugteller angreifen. Das Verbindungselement kann allgemein identisch mit dem Koppelungselement sein, welches das Anzeigeelement mit dem Saugteller verbindet. Durch Betätigung des Betätigungsorgans wird somit unter Erzeugung des Teilvakuums zugleich auch das Verbindungselement bzw. das Koppelungselement lageverändert. Das Anzeigelement kann derart ausgebildet sein, dass bei maximal vorliegendem Teilvakuum der Anzeigebereich des Anzeigeelementes auf Höhe eines Referenzpunktes liegt, wozu das dem Saugteller abgewandte Ende des Anzeigeelementes zumindest im Wesentlichen bündig mit dem Gehäuse abschließt. Das. Anzeigeelement ist hierdurch nicht gesondert optisch erkennbar und zudem auch haptisch gegenüber dem Gehäuse nicht wahrnehmbar, d. h. nicht als gesondertes Element ertastbar. Bei Verminderung des Teilvakuums wird dann der mittlere Bereich des Saugtellers gegenüber der Befestigungsfläche zunehmend beabstandet, so dass das Anzeigeelement dann gegenüber dem Referenzpunkt bzw. dem Gehäuse nach außen vortritt und hiermit sowohl optisch als auch haptisch durch Ertasten wahrnehmbar wird.

Ist das Betätigungsorgan als Hebel wie beispielsweise als Knieoder Kipphebel ausgebildet, so kann das Anzeigeelement den Hebel zumindest teilweise durchdringen. So kann das Betätigungsorgan einen gabelförmigen Endbereich aufweisen, der dem Saugheber zugewandt ist und der gegenüber der Trägerschale anliegen kann. Das Anzeigeelement, das Gehäuseteil der Anzeigeeinrichtung und/oder die Anzeigeeinrichtung insgesamt kann das Betätigungsorgan durchstoßen und von dem Betätigungsorgan der Betätigungseinrichtung aufgenommen sein, z.B. zwischen den beiden Schenkeln des Knie- oder Kipphebels angeordnet sein.

Wird somit allgemein unter Spannung des Knie- oder Kipphebels auch das Anzeigeelement lageverändert, z.B. gegenüber der Trägerschäle oder gegenüber dem Kipphebel verschoben, so kann durch Ankoppelung des Referenzpunktes wie z.B. des Gehäuses der Anzeigeeinrichtung an dem Hebel auch dieses verschoben werden, so dass bei gespanntem Hebel und maximalem Teilvakuum das Anzeigeelement in seiner Nullstellung ist. Die Verschiebung kann hierbei zumindest im Wesentlichen senkrecht zur Hauptebene des Saugtellers erfolgen. Das Anzeigeelement kann nach der Verschiebung zumindest im Wesentlichen bündig mit dem Gehäuse oder auch einem Bereich des Hebels abschließen. Alternativ kann natürlich auch das Anzeigeelement zu einem ortsfesten Referenzpunkt hin verschoben werden.

Insbesondere kann der Vakuumsauger als Saugheber oder als Handgriff ausgestaltet sein. Der Vakuumsauger kann nur eine oder zwei oder mehr Trägerschalen mit je einem Saugteller aufweisen, wobei die Schalen durch einen Handgriff oder auf andere geeignete Weise miteinander verbunden sein können. Jede der Trägerschalen kann mit einer erfindungsgemäßen Anzeigeeinrichtung versehen sein.

Die Erfindung wird nachfolgend beispielhaft beschrieben und anhand der Figuren beispielhaft erläutert. Es zeigen:
Figuren 1-3: eine Darstellung eines Teilbereichs eines erfindungsgemäßen Vakuumsaugers in Querschnittsdarstellungen im entspannten Zustand (Figur 1), im gespannten Zustand bei maximalen Teilvakuum (Figur 2) und im gespannten Zustand bei teilweisem Vakuumverlust (Figur 3),
Figur 4: eine schematische Darstellung des Teilvakuum-Weg-Verlaufs des Anzeigeelementes des Vakuumsaugers nach Fig. 1-3.

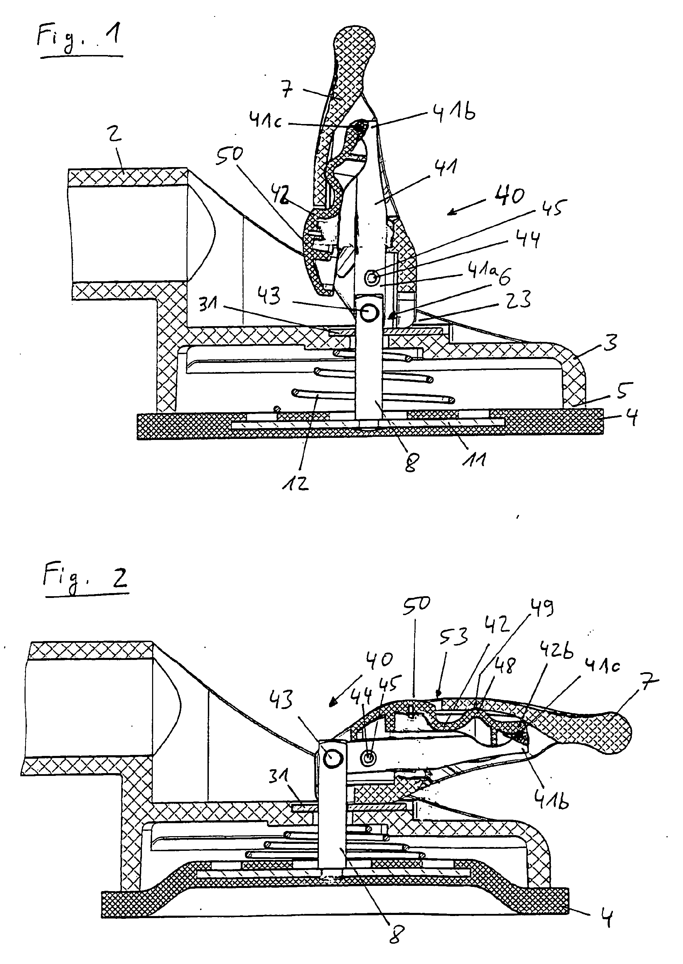

Die Figuren 1 bis 3 zeigen einen erfindungsgemäßen Vakuumsauger nach in drei unterschiedlichen Betriebszuständen. Der Vakuumsauger 1 weist hierbei einen Handgriff 2 auf, welcher zwei an seinen Endbereichen angeordnete Trägerschalen 3 miteinander verbindet.

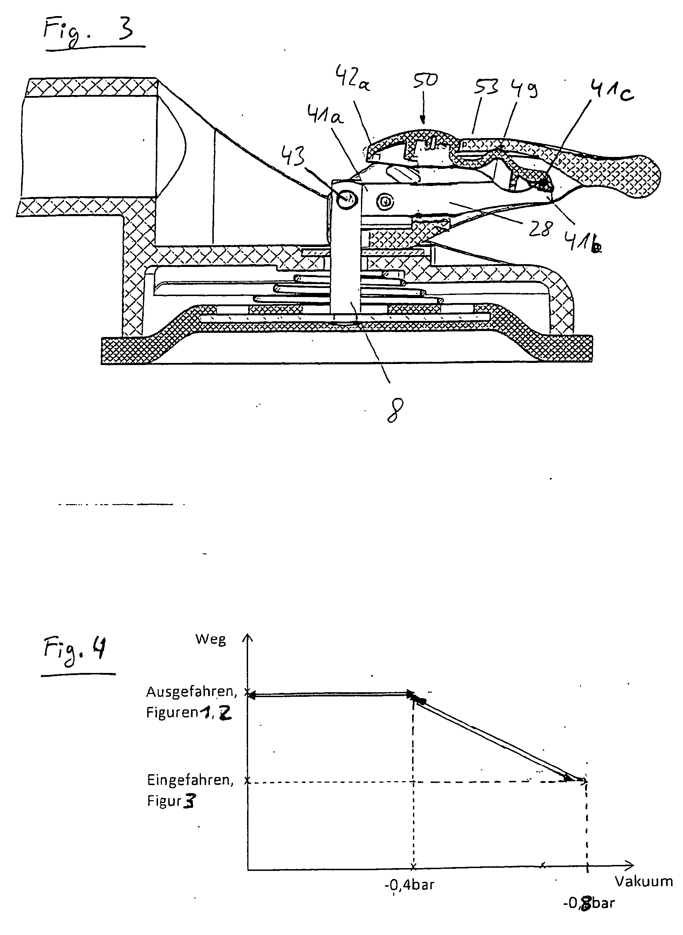

Jede der Trägerschalen 3 weist einen Saugteller 4 aus einem flexiblen, vorzugsweise gummielastischen Material auf, welche durch den Randbereich 5 der Trägerschale gegen eine Befestigungsfläche gedrückt werden kann. Die Trägerschale 3 weist einen Betätigungsmechanismus 6 auf, der ein beispielsweise als Kipp- bzw. Kniehebel ausgestaltetes Betätigungsorgan 7 aufweist und mittels eines Verbindungselementes 8 (oder allgemein eines. Verbindungsmechanismus) an dem Saugteller ankoppelt, so dass unter Verschwenken des Betätigungsorganes 7 der mittlere Bereich 9 des Saugtellers von der Befestigungsfläche beabstandet und so zwischen Saugteller und Befestigungsfläche eine mit einem Teilvakuum beaufschlagte Vakuumkammer gebildet wird (siehe Fig. 2, 3). Das Verbindungselement 8 ist hier als Zugbolzen ausgeführt. Das Verbindungselement 8 kann unmittelbar an dem Betätigungsorgan 7 ankoppeln, beispielsweise über ein Verbindungsjoch, vorzugsweise erfolgt die Ankoppelung mittels weiterer Elemente, die hier zugleich Teil der Anzeigeeinrichtung sein können (siehe unten). Ferner durchgreift das Verbindungselement ein Langloch 10 des Betätigungsorgans. Zur Versteifung des mittleren Bereichs 9 des Saugtellers ist diese mit einem Versteifungselement 11 in Form einer anvulkanisierten Stahlplatte versehen, wobei das Betätigungsorgan das Versteifungselement 11 durchdringt bzw. an diesem ankoppelt. Der Betätigungsmechanismus ist entgegen dem erzeugten Teilvakuum zu betätigen. Zur Festlegung des Betätigungsorgans in seiner Betätigungsstellung ist hier zwischen der Trägerschale und dem Saugteller eine Feder 12 angeordnet, so dass das Betätigungsorgan zur Überführung in seine Ausgangslage einen Widerstand überwinden muss.

Der Vakuumsauger 1 weist eine Anzeigeeinrichtung 40 zur Anzeige des Teilvakuums in der Vakuumkammer auf. Die Anzeigeeinrichtung ist mit dem Saugteller mechanisch mittels eines Koppelungsmechanismus gekoppelt ist, und führt eine vorzugsweise kontinuierliche Bewegung zwischen einer Ausgangsstellung bei maximalem Teilvakuum (Figur. 2) und einer Endanzeigestellung bei Teilvakuumverlust (Figur 3) durch. Der Koppelungsmechanismus ist in Form einer mechanischen Wegübersetzung ausgebildet ist, so dass er bei Vakuumverminderung Lageveränderungen oder Deformationen der Saugscheibe ab beginnendem Vakuumverlust kontinuierlich während des Ausfahrens des Anzeigeelementes in Richtung auf seine Endanzeigestellung mit dem Anzeigeelement kraftübertragend in verstärkte Lageänderungen des Anzeigeelementes überführt. Das zugehörige Anzeigeelement 42 ist hierbei als Schwenkhebel oder Wippe ausgebildet. Das Anzeigeelement 42 ist mittels eines Teils des Betätigungsmechanismus, genauer gesagt mittels des Verbindungselementes 8, mit dem Saugteller 4 verbunden, so dass das Verbindungselement zugleich als Kopplungselement zwischen Anzeigeelement und Saugteller dient. Gegebenenfalls kann jedoch das Anzeigeelement unabhängig von dem Verbindungselement an dem Saugteller ankoppeln, beispielsweise, wenn dieses benachbart zu diesem angeordnet ist, vorzugsweise erfolgt auch dann die Ankoppelung mittels eines Koppelungselementes, welches ebenfalls an dem mittleren Bereich des Saugtellers oder an einem Versteifungselement derselben angreifen kann. Durch die mechanische Koppelung des Anzeigeelementes mit dem Saugteller kann eine Verminderung eines Teilvakuums unmittelbar und auf konstruktiv einfache Weise sowie unabhängig von äußeren Störeinflüssen sicher angezeigt werden. Durch die Wegübersetzung ist eine empfindliche und präzise Anzeige von Lageveränderungen der Saugscheibe möglich, die zudem sehr robust und unabhängig von äußeren Einflüssen ist. Allgemein wird durch Veränderung des Teilvakuums die Lage des Anzeigeelementes 42 gegenüber einem Referenzpunkt, z.B: dem Betätigungsorgan 7, verändert, um eine Änderung des Teilvakuums anzuzeigen. Durch das Anzeigeelement kann eine Änderung des Teilvakuums vorzugsweise kontinuierlich von Beginn des Teilvakuumverlustes an verfolgt werden, vorzugsweise optisch sowie auch haptisch, z.B. durch ein Vorstehen des Anzeigeelementes 42 gegenüber einem Referenzpunkt. Ferner kann auch das Ausmaß der Teilvakuumverminderung durch das Ausmaß des Vorstehens des Anzeigeelementes angezeigt werden und vorzugsweise kontinuierlich verfolgt werden.

Das Anzeigeelement 42 und das Koppelungselement 41 sind zueinander beweglich und jeweils gegenüber dem Verbindungselement 8 beweglich, um eine Wegübersetzung zu bilden, die Lageveränderungen des Saugtellers in verstärkte Lageänderungen des Anzeigeelementes überführt. Bei gegebener Stellung des Verbindungs- bzw. Kopplungselementes kann somit das Anzeigeelement 42 gegenüber einem Referenzpunkt wie z.B. dem Betätigungsorgan 7 lageverändert werden, so dass das Anzeigeelement einen Teilvakuumverlust anzeigt. Das Verbindungselement kann in einer axialen Führung geführt sein, die durch einen Bereich der Trägerschale bereitgestellt werden kann, oder nach dem Ausführungsbeispiel durch eine auf der Trägerschale aufliegenden Platte 20, auf welcher sich zugleich das als Kipphebel ausgeführte Betätigungsorgan abstützt und bei seiner Kippbewegung gleitet.

Wird unter Erzeugung eines maximalen Teilvakuums das Betätigungsorgan 7 betätigt bzw. der Kipphebel vollständig umgelegt (Figur 2), so wird der mittlere Bereich 9 des Saugtellers von der Befestigungsfläche beabstandet. Bei dieser Kippbewegung läuft der Kipphebel auf einer Kurvenbahn 23 ab, wodurch das Verbindungselement 8 in einem Langloch des Kipphebels entlang geführt wird und das Verbindungselement gehoben wird, was entgegen der aus dem Teilvakuum resultierenden Kraft und zu einem kleinen Teil entgegen der Federkraft durch die Feder 12 erfolgen kann. Hierbei wird das Gehäuse 17 aufgrund der Ankoppelung bzw. der Form- und/oder kraftschlüssigen Verbindung mit dem Betätigungsorgan 7 ebenfalls angehoben und gegenüber der Befestigungsfläche beabstandet. Bei maximalem Teilvakuum schließt dann der Anzeigebereich 50 des Anzeigeelementes 42 bündig mit dem umgebenden Bereich des angrenzenden Bauteils, hier des Betätigungsorgans, ab, so dass der Anzeigebereich 50 des Anzeigeelementes bei Ertasten sowie auch optisch nicht gesondert wahrgenommen wird, hier als regulärer Teil des Betätigungsorgans wahrgenommen wird.

Erfolgt nach Erreichen eines maximalen Teilvakuums mittels des Betätigungsmechanismus eine Verminderung des Teilvakuums durch nicht zu vermeidende Leckagen zwischen Saugteller und Befestigungsfläche, so wird der mittlere Bereich des Saugtellers 4 von der Befestigungsfläche zunehmend beabstandet und das Verbindungselement 8 zwischen Saugteller und Betätigungsmechanismus wird von der Befestigungsfläche beabstandet. Das Anzeigeelement 42 wird mittels des Koppelungsmechanismus mit Wegübersetzung in Richtung auf seine Anzeigestellung verschoben. Das Anzeigeelement 16 fährt hierbei mit nachlassendem Teilvakuum gegenüber seinem Referenzpunkt aus, hier gegenüber dem Betätigungsorgan, relativ zu welchem dieses lageveränderlich ist. Die kann durch Ertasten oder optisch wahrgenommen werden. Die Anzeigeeinrichtung 40 ist mit den Bauteilen, die von dem Betätigungsmechanismus verschieden sind, in dem Betätigungsorgan 7 integriert Hierdurch ist eine platzsparende Ausführungsform geschaffen und die Anzeigeeinrichtung vor äußeren Einwirkungen geschützt.

Der wegübersetzende Koppelungsmechanismus besteht nach dem Ausführungsbeispiel im wesentlichen aus dem Koppelungselement 41 und dem Anzeigeelement, wobei die folgenden Ausführungen auch unabhängig hiervon gelten können.

Das Koppelungselement 41 und das Anzeigeelement 42 als Schwenkhebel ausgebildet, was jedoch gegebenenfalls auch nur für eines der beiden Elemente gelten kann. Das Koppelungselement, welches hier in Form eines Schwenkbalkens oder verschwenkbaren Gestängeteils ausgebildet ist, ist mit seinem ersten Endbereich 41a mittels der Gelenkverbindung 43 mit dem verbindungselement 8 gelenkig verbunden, wobei das Verbindungselement entsprechend dem vorherigen Ausführungsbeispiel ausgebildet und mit dem Saugteller 5 verbunden ist. Mit dem dem Verbindungselement abgewandten Endbereich 42b koppelt das Koppelungselement 41 an dem Anzeigeelement 42 an. Dies kann durch eine Gelenkverbindung 41c erfolgen. Das Koppelungselement 41 ist hierbei um die zwischen den beiden Endbereichen angeordnete Achse 44 verschwenkbar. Die Achse 44 wird hierbei durch eine Gelenkverbindung 45 des Koppelungselementes 41 mit dem Betätigungsorgan 7 gebildet, welches durch einen Gelenkstift ausgebildet sein kann. Das Betätigungsorgan 7 koppelt wie in dem ersten Ausführungsbeispiel gezeigt, an dem Verbindungselement 8 an, welches als Zugbolzen ausgeführt sein kann. Hierzu kann der das Verbindungselement quer durchsetzende Stift, welcher zugleich die Gelenkverbindung 43 bildet, in einer Aufnahme des Betätigungsorgans gehaltert sein, so dass unter Verschwenken des Betätigungsorgans entlang der Kurvenbahn 23 das Verbindungselement axial verschoben und der Saugteller 4 angehoben wird.

Das Anzeigeelement 42 ist ebenfalls relativ zu dem Betätigungsorgan 7 verschwenkbar gelagert, wozu eine schwimmende Gelenkverbindung bestehen kann, oder es ist eine andere geeignete Gelenkverbindung vorgesehen. So kann beispielsweise auch das Anzeigelement nach unten durch eine Feder abgestützt sein, die aber nicht eine derartig hohe Federkonstante aufweist, dass durch diese eine Anzeige mit Beginn des vakuumverlustes verhindert wird. Hierzu kann die wulstförmige Erhebung 48, welche an der Innenseite des Betätigungsorgans 7 anliegen kann, als Gelenkelement dienen. Die Gelenkverbindung 49 des Anzeigeelementes mit dem Betätigungsorgan ist somit an der dem Verbindungselement 8 abgewandten Seite der Gelenkverbindung 45 angeordnet. Der Anzeigebereich 50 des Anzeigeelementes 42, durch dessen Lageveränderung die Veränderung des Teilvakuum angezeigt wird, ist hierbei in Bezug auf die Gelenkverbindung 49 der Gelenkverbindung 43 bzw. der Gelenkverbindung 45 zugewandt angeordnet.

Steht der Anzeigebereich 50 des Anzeigeelementes gegenüber dem Betätigungsorgan, genauer gesagt der Oberseite 53 desselben, nach außen vor, so wird eine Verminderung des Teilvakuums optisch und/oder haptisch angezeigt. Mit Teilvakuumverlust fährt das Anzeigeelment kontnuierlich aus, wobei durch die Übersetzung der Schwenkhebel (Koppelungselement und/oder Anzeigeelement) eine Wegübersetzung erfolgt, das Anzeigeelement also stärker ausfährt als sich die Saugscheibe durch den Vakuumverlust anhebt.

In dem in Figur 2 gezeigten Zustand des gespannten Vakuumsaugers bei maximalem Teilvakuum stehen das Koppelungselement 41 und das Betätigungsorgan 7 angewinkelt bzw. im Wesentlichen senkrecht zu dem Verbindungselement 8. Das Anzeigeelement 42 zeigt hierbei maximales Teilvakuum an, wozu der Anzeigebereich 50 im Wesentlichen bündig mit der Oberseite 53 des Betätigungsorgans abschließt. Der dem Verbindungselement 8 gegenüberliegende Endbereich 42b des Anzeigeelementes ist hierbei zwischen dem Endbereich 41b des Koppelungselementes und dem Betätigungsorgan vorzugsweise formschlüssig in seiner Lage fixiert oder weist zu diesen beiden Bauteilen ein nur geringes Spiel auf. Bei dieser Fixierung ist somit auch der Anzeigebereich 50 des Anzeigeelementes lagefixiert, z.B. gegenüber einem manuellen Niederdrücken.

Bei eintretendem Vakuumverlust, wie in Figur 3 dargestellt, hebt sich der mittlere Bereich des Saugtellers geringfügig an und wird von der Befestigungsfläche geringfügig beabstandet. Hierdurch vollführt das Koppelungselement 41 eine Schwenkbewegung um die Gelenkverbindung 45, so dass sich der dem Verbindungselement 8 zugewandte Endbereich 41a anhebt und der diesem abgewandte Endbereich 41b gegenüber der in Figur 5 dargestellten Stellung absenkt. Aufgrund dieser Absenkung des Endbereiches 41b des Koppelungselementes vollführt auch das Anzeigeelement eine Schwenkbewegung, so dass der Anzeigebereich 50 gegenüber der Oberseite 53 des Betätigungsorgans nach oben vorgeschoben wird und somit der Teilvakuumverlust anzeigt. Hierbei wird der dem Verbindungselement 8 abgewandte Endbereich 42b des Anzeigeelementes gegenüber seiner Ausgangsstellung in Figur 5 abgesenkt. Der Endbereich 42b kann hierbei in permanenter Anlage mit dem Endbereich 41b des Koppelungselementes stehen, so dass die Lageveränderung des Anzeigebereiches 50 durch die Lageveränderung des der Gelenkverbindung 49 gegenüberliegenden Endbereichs 42b des Anzeigeelementes gesteuert wird.

Es liegt hiermit ein Koppelungsmechanismus mit einer Wegübersetzung vor, was nach dem Ausführungsbeispiel insbesondere aufgrund der beschriebenen Anordnung der Lagerpunkte und Gelenkverbindungen von Anzeigeelement und Koppelungselement realisiert ist, bei welchem das Anzeigeelement bei Betätigung des Betätigungsmechanismus unter Erzeugung eines Teilvakuums in seine Ausgangsstellung überführt wird. Bei beginnendem Avuumverlust und damit beginnender Lageänderung der Saugscheibe erfolgt bereits eine kontinuierliche, vorzugsweise lineare Überführung des Anzeigeelementes in Richtung auf seine Endanzeigeposition, d.h. bis zum Erreichen des maximalen Teilvakuums oder bis das Anzeigeelement an einem Anschlag lagebegrenzt wird (Fig. 4). Das Anzeigeelement fährt also vermittels der kraftübertragenden Wegübersetzung zunehmend aus, was hier kontinuierlich und gleichmäßig erfolgt. Das maximale Teilvakuum kannhier beispielsweise bei ca. -0,8 bar liegen. Nach fortwährendem Teilvakuumverlust unter mechanischer Koppelung und praktisch kontinuierlicher Lageveränderung des Anzeigelementes in Richtung auf seine (ausgefahrene) Anzeigeposition bindet sich das Anzeigeelement in seiner zweiten Anschlagposition, wozu es einfach an einer Begrenzung des benachbarten bzw. das Anzeigeelement aufnehmenden Bauteils (hier Betätigungsorgan) anliegen kann. Dies kann beispielsweise bei einem für den jeweiligen Anwendungsfall nur noch unzureichendem Teilvakuum gegebene sein (hier -0,4 bar), so dass das Anzeigeelement vollständig in seine Anzeigeposition überführt ist. In dieser Position kann das Anzeigeelement gegen einen Anschlag z.B. am Betätigungsorgan anliegen, so dass ein weiterer Teilvakuumverlust nicht mehr angezeigt wird. Die Weg-Vakuum-Kennlinie des Anzeigelementes kann praktisch hysteresefrei sein. Dies kann dadurch erzeugt werden, dass während des Anzeigevorgangs des Teilvakuumverlustes an den Lagerpunkten 43, 44, 41b, 42b sowie 49 nur geringe Reibbewegungen bei günstigen Materialpaarungen der Reibpartner bestehen. Weiterhin kann die Weg-Vakuum-Kennlinie zwischen den Bewegungspunkten des Anzeigeelements zumindest im Wesentlichen oder genau linear sein. Dies wird dadurch erreicht, dass bei gegebener Anordnung der Lager- und Gelenkpunkte von Anzeigeund Koppelungselement das mechanische Kraft- bzw. Wegübersetzungsverhältnis näherungsweise konstant bleibt und so ein um einen gewissen Betrag verringertes Vakuum in einem näherungsweise linearen Verhältnis zur Verlagerung des Anzeigeelementes steht. Dieser Weg-Vakuum-Verlauf des Anzeigelementes kann ggf. auch unabhängig von dem Ausführungsbeispiel gelten.

Durch die Ausbildung von Koppelungselement und Anzeigeelement als Schwenkhebel liegt ferner eine konstruktiv einfache und zugleich empfindliche Anzeigeeinrichtung vor, die in dem Betätigungsorgan integriert ist.

### Bezugszeichenliste

- 1: Vakuumsauger
- 2: Handgriff
- 3: Trägerschale
- 4: Saugteller
- 4a: mittlerer Saugtellerbereich
- 5: Randbereich
- 6: Betätigungsmechanismus
- 7: Betätigungsorgan
- 8: Verbindungselement
- 8a: Endbereich des Verbindungselementes
- 9: mittlerer Bereich
- 10: Langloch
- 11: Versteifungselement
- 12: Feder
- 23: Kurvenbahn
- 40: Vakuumsauger
- 41: Koppelungselement
- 41a, 41b: Endbereich
- 41c: Gelenk
- 42: Anzeigeelement
- 42a, 42b: Endbereich
- 43: Gelenkverbindung
- 44: Achse
- 45: Gelenkverbindung
- 48: Erhebung
- 49: Gelenkverbindung
- 50: Anzeigebereich
- 53: Oberseite

## Patentansprüche

1. Vakuumsauger zur temporären Fixierung an einer im wesentlichen glatten, luftundurchlässigen Befestigungsfläche, insbesondere als Vakuumheber, mit einer Trägerschale und einem flexiblen Saugteller sowie einem Betätigungsmechanismus, um unter zumindest bereichsweiser Lageveränderung des Saugtellers zwischen diesem und der Befestigungsfläche ein Teilvakuum zu erzeugen, wobei eine Vakuumanzeigeeinrichtung zur Anzeige des Teilvakuums mit einem Anzeigeelement (42) vorgesehen und das Anzeigeelement mit dem Saugteller mechanisch mittels eines Koppelungsmechanismus gekoppelt ist, und eine Bewegung zwischen einer Ausgangsstellung bei maximalem Teilvakuum und einer Endanzeigestellung bei Teilvakuumverlust durchführt, **dadurch gekennzeichnet, dass** der Koppelungsmechanismus in Form einer durch eine Kraftübertragung in Kraftübertragungsrichtung wirkende mechanischen Wegübersetzung ausgebildet ist, welche bei Vakuumverminderung Lageveränderungen oder Deformationen der Saugscheibe ab beginnendem Vakuumverlust während des Ausfahrens des Anzeigeelementes in Richtung auf seine Endanzeigestellung mit dem Anzeigeelement kraftübertragend in verstärkte Lageänderungen des Anzeigeelementes überführt.

2. Vakuumsauger nach Anspruch 1, **dadurch gekennzeichnet, dass** die mechanische Wegübersetzung zumindest ein starres Kraftübertragungselementes aufweist oder in Bezug auf die Kraftübertragungslinie ausschließlich aus starren, miteinander gelenkig oder lageveränderlich verbundenen Kraftübertragungselementen besteht.

3. Vakuumsauger nach Anspruch 2, **dadurch gekennzeichnet, dass** zumindest eines oder sämtliche der Kraftübertragungselemente und/oder das Anzeigeelement, die jeweils von den Elementen des Betätigungsmechanismus verschieden sind, als Schwenkhebel ausgebildet sind.

4. Vakuumsauger nach einem der Ansprüche 1 bis 3, **da** - **durch gekennzeichnet**, dass der Koppelungsmechanismus als Gestänge- oder Getriebeübersetzung ausgebildet ist.

5. Vakuumsauger nach einem der Ansprüche 1 bis 4, **dadurch gekennzeichnet, dass** das Anzeigeelement (42) oder zumindest ein Teil der Anzeigeeinrichtung (40) in dem Betätigungsorgan (7) integriert ist.

6. Vakuumsauger nach einem der Ansprüche 1 bis 5,**da** - **durch gekennzeichnet**, dass die Anzeigeeinrichtung (405) derart ausgebildet ist, dass das Anzeigelement und die Bauteile der Anzeigeeinrichtung, die von der Betätigungseinrichtung verschieden sind, zusammen mit dem Betätigungsorgan (7) montierbar und/oder demontierbar sind.

7. Vakuumsauger nach einem der Ansprüche 1 bis 6, **dadurch gekennzeichnet , dass** ein Verbindungselement (8) zwischen Saugteller (4) und Betätigungsorgan (7) zur Kraftübertragung von dem Betätigungsorgan (7) auf den Saugteller (4) vorgesehen ist, und dass ein starres Koppelungselement als Teil der Anzeigeeinrichtung an einer Koppelungsstelle an dem Verbindungselement (8) angreift.

8. Vakuumsauger nach einem der Ansprüche 1 bis 7, d a - **durch gekennzeichnet** , dass ein Koppelungselement (41) der Anzeigeeinrichtung und/oder das Anzeigeelement (42) als Schwenkhebel ausgebildet ist.

9. Vakuumsauger nach einem der Ansprüche 1 bis 8, **dadurch gekennzeichnet, dass** mindestens eines der Koppelungselemente, die von den Elementen des Betätigungsmechanismus verschieden sind, als außermittig gelagerter Schwenkhebel ausgebildet ist.

10. Vakuumsauger nach einem der Ansprüche 1 bis 9, **da** - **durch gekennzeichnet**, dass das Koppelungselement (41) und das Anzeigeelement (42) oder ein weiteres Koppelungselement jeweils als Schwenkhebel ausgebildet und derart gelagert sind, dass diese bei Verminderung des Teilvakuums eine gegensinnige Schwenkbewegung durchführen.

11. Vakuumsauger nach einem der Ansprüche 1 bis 10, **da** - **durch gekennzeichnet** , dass das Anzeigeelement (42) als separates Bauteil ausgeführt ist und an dem Betätigungsorgan (7) schwenkbar und diesem gegenüber lageveränderlich gelagert ist.

12. Vakuumsauger nach einem der Ansprüche 1 bis 11, **da** - **durch gekennzeichnet** , dass ein Koppelungselement (41) einerseits gelenkig mit einem an dem Saugteller (4) angreifenden Verbindungselement (8) verbunden ist und anderseits gelenkig mit dem Betätigungsorgan der Betätigungseinrichtung oder mit dem Anzeigeelement (42) verbunden ist.

13. Vakuumsauger nach einem der Ansprüche 1 bis 12, **dadurch gekennzeichnet, dass** die Anzeigeeinrichtung ein Anzeigeelement (42) aufweist, welches in der Betätigungsstellung des Betätigungsorgans bei maximalem und/oder minimalem Teilvakuum lagefixiert ist.

## Claims

1. Vacuum suction device for temporarily fixing on a substantially smooth, air-impermeable fixing surface, in particular as a vacuum lifter, comprising a supporting cup and a flexible suction plate as well as an actuating mechanism for producing a partial vacuum between the suction plate and the fixing surface under a at least partial dislocation of the suction plate, wherein a vacuum indication device for indicating a partial vacuum with an indicating element (42) is provided and the indicating element is mechanically coupled to the suction plate by means of a coupling mechanism, and performs a movement between a starting position at a maximum partial vacuum and a final indicating position at a loss of the partial vacuum, **characterized in that** the coupling mechanism is designed in the form of a mechanical reduction acting through a transmission of energy in the energy transmitting direction which in the case of a decrease of the vacuum transforms with said indicating element changes in the position or deformations of the suction plate from the beginning of a vacuum loss and during the excursion of the indicating element towards its final indicating position into intensified changes of position of the indicating element in an energy-transmitting manner.

2. Vacuum suction device according to claim 1, **characterized in that** the mechanical reduction at least comprises a rigid energy transmitting element or, with respect to the energy transmitting line, consists exclusively of rigid energy transmitting elements that are connected to each other in an articulated or displaceable manner.

3. Vacuum suction device according to claim 2, **characterized in that** at least one or all of said energy transmitting elements and/or the indicating element which are respectively different from the elements of the actuating mechanism are constructed as pivoted levers.

4. Vacuum suction device according to one of the claims 1 to 3, **characterized in that** the coupling mechanism is designed as a rod-type or gear-type reduction system.

5. Vacuum suction device according to one of the claims 1 to 4, **characterized in that** the indicating element (42) or at least a part of the indication device (40) is incorporated in the actuating member (7).

6. Vacuum suction device according to one of the claims 1 to 5, **characterized in that** the indication device (40) is constructed in such a manner that the indicating element and the components of the indication device which are different from the actuation device can be mounted and/or demounted together with the actuating member (7).

7. Vacuum suction device according to one of the claims 1 to 6, **characterized in that** a connecting element (8) between the suction plate (4) and the actuating member (7) is provided for the transmission of energy from the actuating member (7) to the suction plate (4) and that a rigid coupling element being part of the indication device engages at the connecting element (8) at a coupling position.

8. Vacuum suction device according to one of the claims 1 to 7, **characterized in that** a coupling element (41) of the indication device and/or the indicating element (42) is designed as a pivoted lever.

9. Vacuum suction device according to one of the claims 1 to 8, **characterized in that** at least one of the coupling elements which are different from the elements of the actuation device is designed as an eccentrically pivoted lever.

10. Vacuum suction device according to one of the claims 1 to 9, **characterized in that** the coupling element (41) and the indicating element (42) or a further coupling element are each designed as a pivoted lever and are supported in such a manner that they perform a pivoting movement in opposite directions when the partial vacuum decreases.

11. Vacuum suction device according to one of the claims 1 to 10, **characterized in that** the indicating element (42) is designed as a separate component and is pivotably supported on the actuating member (7) and can be displaced with respect to the same.

12. Vacuum suction device according to one of the claims 1 to 11, **characterized in that** a coupling element (41) is articulated to a connecting element (8) engaging the suction plate (4) on the one side and is articulated to the actuating member of the actuation device or to the indicating element (42) on the other side.

13. Vacuum suction device according to one of the claims 1 to 12, **characterized in that** the indication device includes an indicating element (42), which is fixed in position in the actuating position of the actuating member at a maximum and/or minimum partial vacuum.

## Revendications

1. Ventouse de levage pour la fixation temporaire sur une surface de fixation essentiellement lisse et imperméable à l'air, notamment élévateur à vide, comportant un bassin porteur et un plateau de succion ainsi qu'un mécanisme d'actionnement pour produire un vide partiel entre le plateau de succion et la surface de fixation sous dislocation du plateau de succion au moins par régions, dans laquelle ventouse est prévu un dispositif d'indication de vide pour indiquer le vide partiel au moyen d'un élément d'indication (42) et l'élément d'indication est couplé mécaniquement au plateau de succion au moyen d'un mécanisme de couplage et fait un mouvement entre une position de départ sous un vide partiel maximal et une position finale d'indication sous une perte du vide partiel, **caractérisée en ce que** le mécanisme de couplage est réalisé en forme d'un avantage mécanique de distance agissant par une transmission d'énergie dans la direction de transmission d'énergie, qui en cas d'une diminution de vide transforme, avec l'élément d'indication, des changements de position ou des déformations du plateau de succion en des changements de position plus forts de l'élément d'indication, à partir d'une perte de vide commençante et pendant l'excursion de l'élément d'indication vers sa position finale d'indication, d'une manière transmettant d'énergie.

2. Ventouse de levage selon la revendication 1, **caractérisée en ce que** l'avantage mécanique de distance comporte au moins un élément rigide de transmission d'énergie ou consiste, par rapport à la ligne de transmission d'énergie, exclusivement en éléments de transmission d'énergie rigides qui sont connectés l'un à l'autre d'une manière articulée ou déplaçable.

3. Ventouse de levage selon la revendication 2, **caractérisée en ce que** l'un au moins ou tous les éléments de transmission d'énergie et/ou l'élément d'indication, qui sont respectivement différents des éléments du mécanisme d'actionnement, sont réalisés comme leviers pivotants.

4. Ventouse de levage selon l'une des revendications 1 à 3, **caractérisée en ce que** le mécanisme de couplage est réalisé comme avantage mécanique par tiges ou par engrenage.

5. Ventouse de levage selon l'une des revendications 1 à 4, **caractérisée en ce que** l'élément d'indication (43) ou au moins une partie du dispositif d'indication (40) est intégré dans l'organe d'actionnement (7).

6. Ventouse de levage selon l'une des revendications 1 à 5, **caractérisée en ce que** le dispositif d'indication (40) est réalisé de telle sorte que l'élément d'indication et les éléments de construction qui sont différents du dispositif d'actionnement peuvent être montés et/ou démontés conjointement avec l'organe d'actionnement (7).

7. Ventouse de levage selon l'une des revendications 1 à 6, **caractérisée en ce qu'**un élément de raccordement (8) est prévu entre le plateau de succion (4) et l'organe d'actionnement (7) pour la transmission d'énergie de l'organe d'actionnement (7) au plateau de succion (4) et **en ce qu'**un élément rigide de couplage faisant partie du dispositif d'indication engage sur l'élément de raccordement (8) à un point de couplage.

8. Ventouse de levage selon l'une des revendications 1 à 7, **caractérisée en ce qu'**un élément de couplage (41) du dispositif d'indication et/or l'élément de couplage (42) est réalisé comme levier pivotant.

9. Ventouse de levage selon l'une des revendications 1 à 8, caractérisée an ce que l'une au moins des éléments de couplage qui sont différents des éléments du mécanisme d'actionnement sont réalisés comme leviers pivotants excentriques.

10. Ventouse de levage selon l'une des revendications 1 à 9, **caractérisée en ce que** l'élément de couplage (41) et l'élément d'indication (42) ou un élément de couplage ultérieur sont respectivement formés comme levier pivotant et sont logés de cette façon qu'ils font un mouvement en sens opposé sous une diminution du vide partiel.

11. Ventouse de levage selon l'une des revendications 1 à 10, **caractérisée en ce que** l'élément d'indication (42) est réalisé comme élément de construction séparé et est logé sur l'organe d'actionnement (7) d'une manière pivotante et déplaçable par rapport audit organe d'actionnement.

12. Ventouse de levage selon l'une des revendications 1 à 11, **caractérisée en ce qu'**un élément de couplage (41) est articulé sur un élément de raccordement (8) qui engage au plateau de succion (4) d'une part et est articulé sur l'organe d'actionnement du dispositif d'actionnement ou sur l'élément d'indication d'autre part.

13. Ventouse de levage selon l'une des revendications 1 à 12, **caractérisée en ce que** le dispositif d'indication comporte un élément d'indication (42) qui, dans la position d'actionnement de l'organe d'actionnement sous un vide partiel maximal et/ou minimal, est fixé en position.
